# EUROPEAN PATENT APPLICATION

(11) **EP 4 733 823 A1**
(43) Date of publication of application: **29.04.2026**
(21) Application number: 24832270.3
(22) Date of filing: 24.05.2024
(51) Int. Cl.: G02B 6/44

(54) **ROLLABLE OPTICAL FIBER RIBBON AND MANUFACTURING METHOD THEREFOR**

(30) Priority: 26.06.2023 KR 20230081687; 18.10.2023 KR 20230139207
(71) Applicant: LS Cable & System Ltd., Anyang-si, Gyeonggi-do 14119 (KR)
(72) Inventor: LEE, Man Su, Daegu 42759 (KR); YUN, Hui Jeong, Gumi-si Gyeongsangbuk-do 39460 (KR)
(74) Representative: K&L Gates LLP
(86) International application number: PCT/KR2024/007093
(87) International publication number: WO 2025/005487

(57) **Abstract**

The present invention relates to a rollable optical fiber ribbon and a manufacturing method of the same, wherein: the arrangement of a plurality of bonding parts for bonding adjacent optical fibers constituting a rollable optical fiber ribbon is optimized to provide sufficient bonding strength between the adjacent optical fibers, so as to prevent separation of optical fibers during widthwise rolling of the optical fiber ribbon; in the process of dispensing resin for forming bonding parts, the bonding parts adjacent in the width direction of the optical fiber ribbon are prevented from being unintentionally connected to each other by the bonding resin to deteriorate the flexibility thereof, so that widthwise rolling of the optical fiber ribbon is facilitated; and damage to the optical fibers can be prevented in the process of separating a specific optical fiber in order to achieve optical connection.

## Description

### [Technical Field]

The present invention relates to a rollable optical fiber ribbon and a manufacturing method of the same. More specifically, the present invention relates to a rollable optical fiber ribbon and a manufacturing method of the same that, by optimizing the arrangement of a plurality of bonding parts that bond adjacent optical fibers constituting a rollable optical fiber ribbon, are capable of providing sufficient bonding strength between adjacent optical fibers to prevent separation of optical fibers during widthwise rolling of an optical fiber ribbon, capable of preventing a phenomenon in which an adjacent bonding part in a width direction of the optical fiber ribbon is unintentionally connected by bonding resin in a process of dispensing resin for forming a bonding part so that flexibility is degraded, thereby facilitating widthwise rolling of the optical fiber ribbon, and capable of preventing optical fiber damage in a process of separating a specific optical fiber for optical connection.

### [Background Art]

An optical fiber ribbon is a unified body formed by bonding, in parallel, a plurality of optical fibers with bonding parts, and is generally manufactured in a strip form, and by laminating this, a ribbon laminate in a polygonal column form may also be configured.

An optical fiber ribbon is mainly utilized in a large-capacity communication network with an advantage that batch connection is possible by each optical fiber ribbon at a connection end.

Within a pipeline for constructing an optical communication network, a plurality of tubes (or micro tubes) is pre-installed, and in a case of laying a strip-form optical fiber ribbon or a polygonal column-form optical fiber ribbon laminate in a tube whose cross-section is mainly circular, a usefulness of an internal space of the tubes, etc. installed in the pipeline is not high. In addition, an optical cable or an optical unit is preferable to have a larger number of optical fiber cores acceptable to be accommodated with respect to the same cross-sectional area.

In order to increase a usefulness of an internal space of the tubes installed in a pipeline for constructing an optical communication network or to increase the number of accommodated optical fiber cores of an optical cable or an optical unit, a rollable optical fiber ribbon that is acceptable to be accommodated by deforming an optical fiber ribbon into a cylindrical shape and the like by rolling in a width direction is being introduced.

This rollable optical fiber ribbon needs to maintain a form of the optical fiber ribbon by preventing optical fibers bonded in a rolled state in a width direction constituting the optical fiber ribbon, that is, in a rolling state, from being easily separated, and when releasing a rolling state at a connection end, it needs to be restored to a shape of a general strip-form optical fiber ribbon to enable batch connection, and even in a case where an individual optical fiber needs to be separated in a connection process, a work of separating the individual optical fiber should be easy and damage of the optical fiber in a separation process should also be prevented, and such various conditions need to be satisfied.

To this end, there have been various efforts and attempts to manufacture a rollable optical fiber ribbon that may enable widthwise rolling while preventing separation of optical fibers or damage by combining and using a specific bonding part pattern formed according to pattern rules such as a predetermined period or interval of a plurality of bonding parts in a width direction or a longitudinal direction of an optical fiber ribbon.

Further, a plurality of bonding parts may be formed by a method in which bonding resin is simultaneously or continuously dispensed to a surface of the optical fiber ribbon from a plurality of dispense nozzles provided in a dispenser and the like.

Meanwhile, in a case where the bonding parts are arranged close to each other in the width direction of the optical fiber ribbon during formation of the bonding part, in a process in which resin for forming the bonding part is dispensed, an adjacent bonding part in the width direction of the optical fiber ribbon is unintentionally connected by bonding resin, whereby a problem that the bonding parts are connected occurs, and thereby a width-direction flexibility of the optical fiber ribbon is degraded, and widthwise rolling is not easy, and at a connection end a branching operation of a specific optical fiber for optical connection is difficult, so that a problem that the optical fiber is damaged occurred.

Therefore, there is a great demand for a rollable optical fiber ribbon and a manufacturing method of the same capable of preventing separation of optical fibers in a widthwise rolling process of an optical fiber ribbon by sufficiently bonding optical fibers by a bonding part by optimizing the arrangement of a plurality of bonding parts that bond adjacent optical fibers constituting a rollable optical fiber ribbon, and capable of preventing a phenomenon in which flexibility is degraded due to bonding resin connecting an adjacnet bonding part in the width direction of the optical fiber ribbon unintentionally in a process of dispensing resin for forming a bonding part.

### [Disclosure]

### [Technical Problem]

The present invention is directed to providing a rollable optical fiber ribbon and a manufacturing method of the same that, by optimizing the arrangement of a plurality of bonding parts that bond adjacent optical fibers constituting a rollable optical fiber ribbon, are capable of providing sufficient bonding strength between adjacent optical fibers to prevent separation of optical fibers during widthwise rolling of an optical fiber ribbon, capable of preventing a phenomenon in which an adjacent bonding part in a width direction of the optical fiber ribbon is unintentionally connected by bonding resin in a process of dispensing resin for forming a bonding part so that flexibility is degraded, thereby facilitating widthwise rolling of the optical fiber ribbon, and capable of prevent optical fiber damage in a process of separating a specific optical fiber for optical connection.

### [Technical Solution]

To achieve the aforementioned object, there is provided a rollable optical fiber ribbon that is rollable in a width direction of the ribbon, according to the present invention. The rollable optical fiber ribbon may comprise: a plurality of optical fibers arranged in parallel; and a plurality of bonding parts arranged with a separation in a longitudinal direction of the ribbon and configured to bond a pair of adjacent optical fibers among the plurality of optical fibers, in which a plurality of bonding parts may be arranged at positions corresponding to each other in the width direction of the optical fiber ribbon, three or more of the optical fibers may be arranged between a pair of adjacent bonding parts in the width direction of the optical fiber ribbon, and a separation distance (W_{G}) between the pair of adjacent bonding parts in the width direction of the optical fiber ribbon may be 360 micrometers (µm) to 1120 micrometers (µm), and a width (W_{B}) of the bonding part may be smaller than two times an outer diameter (D_{F}) of the optical fiber.

In addition, a length (LB) of the bonding part may be 5 millimeters (mm) to 18 millimeters (mm).

Further, a separation distance (L_{G}) in the longitudinal direction of the optical fiber ribbon between a bonding part that bonds an n-th (n is a natural number of 1 or more) optical fiber and an (n+1)-th optical fiber and a bonding part that bonds the (n+1)-th optical fiber and a (n+2)-th optical fiber may be 3 millimeters (mm) to 15 millimeters (mm), among the plurality of optical fibers.

Here, a ratio (L_{G}/L_{B}) of the separation distance (L_{G}) in the longitudinal direction of the optical fiber ribbon between the bonding parts to the length (L_{B}) of the bonding part may be 0.4 to 2.

In this case, the separation distance (L_{G}) in the longitudinal direction of the optical fiber ribbon between the bonding parts may be less than or equal to the length (L_{B}) of the bonding part.

Further, a length of the non-bonding part (L_{N}), which is the shortest distance between a pair of adjacent bonding parts among the plurality of bonding parts that bond a pair of adjacent optical fibers, may be 30 millimeters (mm) to 70 millimeters (mm).

In addition, a ratio (L_{N}/L_{B}) of the length of the non-bonding part (L_{N}) to the length (L_{B}) of the bonding part may be 2 to 10.

Further, a lengthwise period (P) of the bonding part may be 24 millimeters (mm) to 84 millimeters (mm).

Here, the separation distance (W_{G}) between the pair of adjacent bonding parts in the width direction of the optical fiber ribbon may be 360 micrometers (µm) to 835 micrometers (µm).

In this case, the bonding part may be formed by applying a UV-curable resin between a pair of adjacent optical fibers and then curing the applied resin.

Further, the bonding part may have an elongation of 80% to 220%, a tensile strength of 7 MPa to 21 MPa, and a secant modulus of elasticity of 30 MPa to 90 MPa at 2.5% strain.

In addition, a resin constituting the bonding part may have a viscosity of 150 mPa·s to 440 mPa·s at 30°C, and a density of 0.52 g/cm³ to 1.73 g/cm³ at 23°C.

Further, among the plurality of optical fibers, positions in the width direction of the optical fiber ribbon for bonding parts that bond an n-th (n is a natural number of 1 or more) optical fiber and an (n+1)-th optical fiber, bonding parts that bond the (n+1)-th optical fiber and a (n+2)-th optical fiber, and a bonding part that bonds the (n+2)-th optical fiber and a (n+3)-th optical fiber may not all correspond to each other.

Here, among the plurality of optical fibers, positions in the longitudinal direction of the optical fiber ribbon for bonding parts that bond the n-th (n is a natural number of 1 or more) optical fiber and the (n+1)-th optical fiber, and bonding parts that bond the (n+3)-th optical fiber and a (n+4)-th optical fiber may correspond to each other.

Here, among the plurality of optical fibers, positions in the width direction of the optical fiber ribbon for bonding parts that bond an (n+3)-th optical fiber and an (n+4)-th optical fiber do not correspond to bonding parts that bond an n-th optical fiber and an (n+1)-th optical fiber, bonding parts that bond the (n+1)-th optical fiber and an (n+2)-th optical fiber, and bonding parts that bond the (n+2)-th optical fiber and the (n+3)-th optical fiber, and wherein positions in the longitudinal direction of the optical fiber ribbon for bonding parts that bond the n-th optical fiber and the (n+1)-th optical fiber correspond to positions for bonding parts that bond the (n+4)-th optical fiber and the (n+5)-th optical fiber.

In this case, the width (W_{B}) of the bonding part may be smaller than 1.6 times the outer diameter (D_{F}) of the optical fiber.

In addition, to achieve the aforementioned object, there is provided a manufacturing method of the rollable optical fiber ribbon described above, according to the present invention. The manufacturing method may comprise: arranging a plurality of optical fibers in parallel; conveying the plurality of optical fibers arranged in parallel at a line speed of 50 m/min to 1000 m/min; dispensing resin between the plurality of conveyed optical fibers from a plurality of dispenser nozzles arranged with a separation in the width direction of the optical fiber ribbon; and forming the plurality of bonding parts by UV curing of the dispensed resin.

In addition, a plurality of dispensers may be configured with a plurality of dispenser sets including one or more dispensers, each dispenser set may be arranged with a separation at different positions in the longitudinal direction of the optical fiber ribbon, and each dispenser included in one dispenser set may be arranged with a separation in the width direction at corresponding positions in the longitudinal direction of the optical fiber ribbon.

Further, resin may be dispensed simultaneously from dispenser nozzles of all dispensers.

Here, the number of the dispenser sets may be three or more.

### [Advantageous Effects]

According to a rollable optical fiber ribbon and a manufacturing method of the same according to the present invention, by arranging dispenser nozzles that dispense bonding resin so that a distance between a pair of adjacent bonding parts in a width direction of an optical fiber ribbon becomes a range of 360 micrometers (µm) to 1120 micrometers (µm), and preferably a range of 360 micrometers (µm) to 835 micrometers (µm), sufficient bonding strength between adjacent optical fibers may be provided to prevent separation of optical fibers during widthwise rolling of the optical fiber ribbon.

In addition, according to a rollable optical fiber ribbon and a manufacturing method of the same according to the present invention, in a process of dispensing resin for forming a bonding part, an adjacent bonding part in the width direction of the optical fiber ribbon being unintentionally connected by bonding resin, whereby flexibility is degraded, may be prevented to facilitate widthwise rolling of the optical fiber ribbon, and when separating a specific optical fiber from the optical fiber ribbon for optical connection, optical fiber damage may be prevented.

### [Description of Drawings]

FIG. 1 illustrates an embodiment of a state rolled in a width direction of a rollable optical fiber ribbon according to the present invention.
FIG. 2 illustrates a plan view of an embodiment of a rollable optical fiber ribbon according to the present invention.
FIG. 3 is a reference view for explaining a shape of the arrangement of a plurality of bonding parts constituting a rollable optical fiber ribbon according to the present invention.
FIG. 4 illustrates a plan view of another embodiment of a rollable optical fiber ribbon according to the present invention.
FIG. 5 to FIG. 7 illustrate plan views of various embodiments according to a bonding part shape of a rollable optical fiber ribbon according to the present invention.
FIG. 8 illustrates an enlarged cross-sectional view of an embodiment of a rollable optical fiber ribbon according to the present invention.
FIG. 9 illustrates an enlarged cross-sectional view of another embodiment of a rollable optical fiber ribbon according to the present invention.
FIG. 10 illustrates an enlarged cross-sectional view of another embodiment of an optical fiber ribbon according to the present invention.
FIG. 11 illustrates an enlarged cross-sectional view of another embodiment of a rollable optical fiber ribbon according to the present invention.

### [Mode for Disclosure]

Hereinafter, exemplary embodiments of the present invention will be described in detail with reference to the accompanying drawings. However, the present invention is not limited to the exemplary embodiments to be described below and may be specified as other aspects. On the contrary, the embodiments introduced herein are provided to make the disclosed content thorough and complete, and sufficiently transfer the technical teachings of the present invention to those skilled in the art. Like reference numerals indicate like constituent elements throughout the specification.

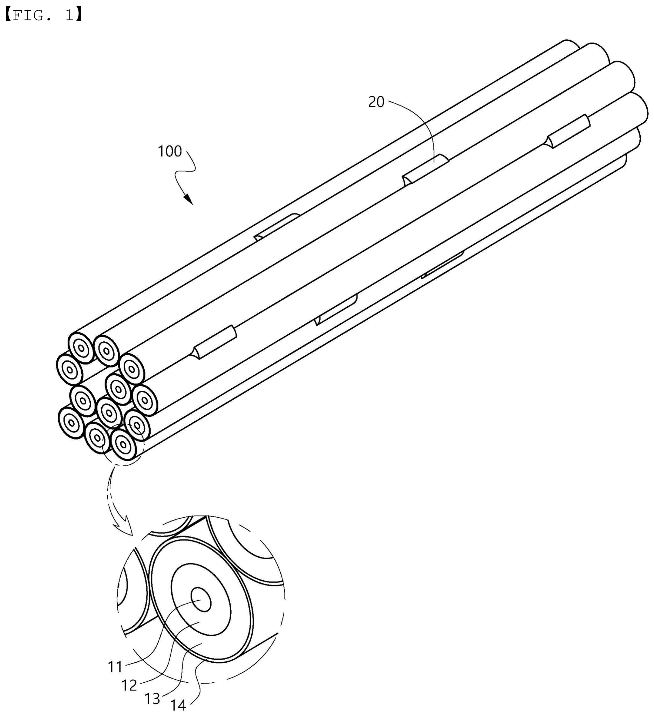

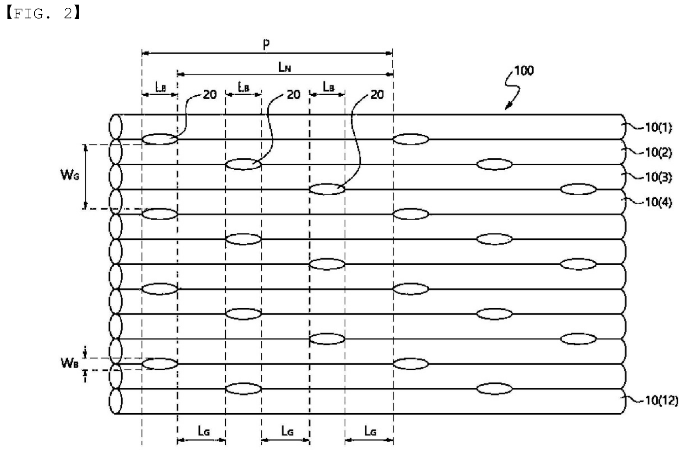

FIG. 1 illustrates an embodiment of a state rolled in a width direction of an optical fiber ribbon 100 according to the present invention, and FIG. 2 illustrates a plan view of an embodiment of a rollable optical fiber ribbon 100 according to the present invention.

As illustrated in FIG. 1, a rollable optical fiber ribbon 100 according to the present invention may be configured in a state rolled in a width direction with a plurality of optical fibers bonded in parallel through the plurality of bonding parts 20. Each optical fiber 10 constituting the rollable optical fiber ribbon 100 may have an outer diameter in a range of 180 micrometers (µm) to 265 micrometers (µm), and the optical fiber 10 may be configured to include a core 11, a cladding layer 12, a coating layer 13, and a coloring layer 14.

The core 11 may be formed of glass or a synthetic resin material and delivers light. The cladding layer 12 may be formed so as to surround an outer circumferential surface of the core 11.

The cladding layer 12 transmits a signal by allowing light passing through a central portion of the optical fiber 10 to undergo total internal reflection by using glass of silica material or synthetic resin and the like having a refractive index relatively lower than that of the core 11.

The coating layer 13 may be formed by coating, on a surface of the cladding layer 12, a material including at least one of acrylate, polyimide, and carbon. The coating layer 13 is formed so as to surround an outer circumferential surface of the cladding layer 12 and absorbs external shock delivered to the cladding layer 12. The coating layer 13 may be configured of a plurality of layers having different physical properties such as modulus in order to protect internal components.

The rollable optical fiber ribbon 100 according to the present invention is configured to be rollable in a width direction, and each optical fiber 10 constituting the rollable optical fiber ribbon 100 may include the coloring layer 14 at an outermost layer.

The coloring layer 14 enables identification through color with other optical fibers by imparting color to the optical fiber 10 as a coating material including a coloring agent such as a colored or colorless pigment is applied to a surface of the coating layer 13.

As such, the rollable optical fiber ribbon 100 may bond adjacent optical fibers by forming a bonding part, and if a bonding strength of the bonding part is too small, for example, when the number of bonding parts is too small or a length of a bonding part is short, during a rolling process of an optical fiber ribbon the optical fibers are too easily separated so that it is difficult to maintain a rolling state, and when the bonding strength is too large, for example, when bonding parts are too many or adjacent bonding parts are connected to each other with resin, flexibility is insufficient so that rolling is difficult, and during a process of branching an individual optical fiber for a connection at an end portion, a problem that the optical fiber is damaged may occur.

Therefore, the present invention solved the above-described problem by optimizing the arrangement of the plurality of bonding parts that bond adjacent optical fibers constituting a rollable optical fiber ribbon. A detailed description will be given with reference to FIG. 2 and the following.

As illustrated in FIG. 2, the rollable optical fiber ribbon 100 according to the present invention is provided with a plurality of optical fibers 10 in parallel, and among the plurality of optical fibers 10, a pair of adjacent optical fibers 10 are bonded through the plurality of bonding parts 20 that are arranged with a separation in a longitudinal direction of an optical fiber ribbon, and a separation distance (or separation distance, gap distance) (W_{G}) between a pair of adjacent bonding parts 20 among the plurality of bonding parts 20 in a width direction of the optical fiber ribbon may be in a range of 360 micrometers (µm) to 1120 micrometers (µm), and preferably may be in a range of 360 micrometers (µm) to 835 micrometers (µm).

The rollable optical fiber ribbon 100 may be configured by bonding, through the plurality of bonding parts 20 having a specific pattern along a longitudinal direction of an optical fiber ribbon, a pair of optical fibers 10 arranged adjacent among a plurality of optical fibers 10 arranged in parallel.

Here, the plurality of optical fibers 10 constituting the rollable optical fiber ribbon 100 may be bonded in parallel in a state adjacent by the bonding part 20 in a state in which the pair of optical fibers 10 are in external contact or minutely spaced, and the bonding part 20 may be arranged in a partial region in a circumferential direction of the optical fiber 10.

The rollable optical fiber ribbon 100 according to the present invention may combine a specific bonding part pattern formed according to predetermined pattern rules of the plurality of bonding parts 20 in a width direction of the optical fiber ribbon or in a longitudinal direction of the optical fiber ribbon to be capable of widthwise rolling while preventing optical fiber 10 separation or optical fiber 10 damage in a rolling process.

Here, the width direction of an optical fiber ribbon means a vertical direction of the optical fiber ribbon 100 based on a drawing illustrated in FIG. 2, and the longitudinal direction of an optical fiber ribbon means a direction in which the optical fiber 10 is extended long, that is, a horizontal direction.

Further, the bonding part 20 of the rollable optical fiber ribbon 100 according to the present invention may be formed by a method of dispensing and curing bonding resin between adjacent optical fibers from a plurality of dispenser nozzles arranged at predetermined positions.

Meanwhile, in a case where a distance of a pair of bonding parts 20 close in a width direction of the optical fiber ribbon 100 during formation of a bonding part of the rollable optical fiber ribbon 100 is too close, an adjacent bonding part may be connected by bonding resin dispensed in a width direction of the optical fiber ribbon 100 in a process in which resin is dispensed, and accordingly, in a region where bonding parts are connected by bonding resin, flexibility is degraded so that widthwise rolling of the optical fiber ribbon 100 is not easy, and the bonding part 20 may be unnecessarily formed large or a bonding strength may be excessive, and damage of an optical fiber may also occur during a branching work of a specific optical fiber 10 at a connection end or a branching end for connection.

Therefore, the rollable optical fiber ribbon 100 according to the present invention includes a plurality of bonding parts 20 that bond a pair of adjacent optical fibers 10, and among the plurality of bonding parts 20 formed in a width direction of the optical fiber ribbon, a separation distance (W_{G}) between a pair of adjacent bonding parts 20 was configured to be in a range of 360 micrometers (µm) to 1120 micrometers (µm), and preferably to be in a range of 360 micrometers (µm) to 835 micrometers (µm).

That is, the rollable optical fiber ribbon 100 according to the present invention forms a specific bonding part pattern with a plurality of bonding parts 20 as described below, but sufficiently secures the separation distance (W_{G}) between a pair of adjacent bonding parts 20 among the plurality of bonding parts formed at corresponding positions in a width direction of the optical fiber ribbon, and by making a width (W_{B}) of the bonding part 20 smaller than two times an outer diameter (D_{F}) of an optical fiber included in the rollable optical fiber ribbon 100, a phenomenon in which different bonding parts 20 are attached to each other during formation of a bonding part or in which more than two continuous adjacent optical fibers are connected by one bonding part 20 may be prevented.

More preferably, by making the width (W_{B}) of the bonding part 20 smaller than 1.6 times an outer diameter (D_{F}) of an optical fiber included in the rollable optical fiber ribbon 100, a margin considering a deviation of the width (W_{B}) of the bonding part 20 generated in a manufacturing process of the rollable optical fiber ribbon 100 may be secured to stably secure a structure.

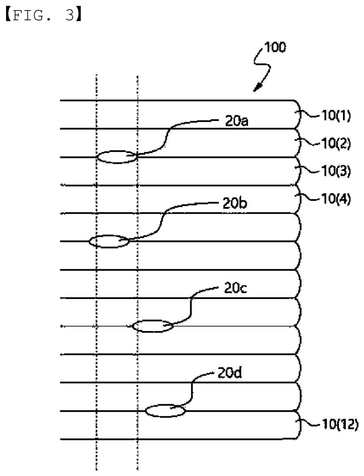

With reference to the reference view of FIG. 3, a more detailed description will be given about an arrangement shape of a plurality of bonding parts 20 constituting the rollable optical fiber ribbon 100.

FIG. 3 is an embodiment for various arrangement shapes of four bonding parts arranged in a width direction of a rollable optical fiber ribbon.

The rollable optical fiber ribbon 100 according to the present invention may be formed such that a plurality of bonding parts 20 are arranged at corresponding positions in a width direction of an optical fiber ribbon, and among the plurality of bonding parts 20 in the width direction of the optical fiber ribbon, a separation distance (W_{G}) between a pair of adjacent bonding parts 20 may be secured to be not less than a predetermined distance range.

Here, the fact that the plurality of bonding parts 20 are "arranged at corresponding positions" means an arranged shape of the plurality of bonding parts 20 that are present at positions where at least a part of each bonding part 20 overlaps in a longitudinal direction of an optical fiber ribbon. That is, in FIG. 3, positions of three bonding parts 20a, 20b, 20c correspond to each other, but one bonding part 20d does not correspond to the other positions.

In addition, the fact that two bonding parts 20 are "adjacent" means, as described above, a shape arranged to be adjacent among the plurality of bonding parts 20a, 20b, 20c arranged at corresponding positions. That is, in FIG. 3, a bonding part that is adjacent to the bonding part 20a that bonds a second optical fiber and a third optical fiber is the bonding part 20b that bonds a fifth optical fiber and a sixth optical fiber, and a bonding part that is adjacent to the bonding part 20b that bonds the fifth optical fiber and the sixth optical fiber is the bonding part 20c that bonds an eighth optical fiber and a ninth optical fiber.

Based on an embodiment illustrated in FIG. 2, in a width direction of an optical fiber ribbon, among a pair of adjacent bonding parts, a length of a straight line connecting a lowermost portion of the bonding part 20 provided in an upper side in the width direction of the optical fiber ribbon and an uppermost portion of the bonding part 20 provided in a lower side in the width direction of the optical fiber ribbon may be defined as a separation distance (or separation distance, gap distance) (W_{G}).

As illustrated in FIG. 2, the rollable optical fiber ribbon 100 according to the present invention may be provided with at least three optical fibers 10 between a pair of adjacent bonding parts 20 among a plurality of bonding parts 20 formed in a width direction of an optical fiber ribbon at an arbitrary position in a longitudinal direction of the optical fiber ribbon.

As illustrated in FIG. 2, when three optical fibers 10 are provided between a pair of adjacent bonding parts 20 in a width direction of an optical fiber ribbon, as in the rollable optical fiber ribbon 100 according to the present invention, the bonding parts 20 that bond an n-th (n is a natural number of 1 or more) optical fiber 10 and an (n+1)-th optical fiber 10, the bonding parts 20 that bond the (n+1)-th optical fiber 10 and the (n+2)-th optical fiber 10, and the bonding parts 20 that bond the (n+2)-th optical fiber 10 and the (n+3)-th optical fiber 10 may be formed in a diagonal direction or a stepwise pattern.

In this case, as illustrated in FIG. 2, positions in an optical fiber ribbon longitudinal direction for the bonding parts 20 that bond an n-th (n is a natural number of 1 or more) optical fiber 10 and an (n+1)-th optical fiber 10, positions in an optical fiber ribbon longitudinal direction for the bonding parts 20 that bond the (n+1)-th optical fiber 10 and the (n+2)-th optical fiber 10, and positions in an optical fiber ribbon longitudinal direction for the bonding parts 20 that bond the (n+2)-th optical fiber 10 and the (n+3)-th optical fiber 10 may be configured to not all correspond to each other.

For example, the rollable optical fiber ribbon 100 of an embodiment illustrated in FIG. 2 is configured with twelve optical fibers 10, and positions in an optical fiber ribbon longitudinal direction for the bonding parts 20 that bond a first (n, n=1) optical fiber 10(1) and a second (n+1) optical fiber 10(2), the bonding parts 20 that bond the second (n+1) optical fiber 10(2) and a third (n+2) optical fiber 10(3), and the bonding parts 20 that bond the third (n+2) optical fiber 10(3) and a fourth (n+3) optical fiber 10(4) may be configured to not all correspond to each other.

Further, among a plurality of optical fibers 10 constituting the optical fiber ribbon 100, a position in an optical fiber ribbon longitudinal direction for the bonding part 20 that bonds an (n+1)-th optical fiber 10 and an (n+2)-th optical fiber 10 may be configured to be arranged at a position corresponding to a center of a position in an optical fiber ribbon longitudinal direction for the bonding part 20 that bonds an n-th optical fiber 10 and an (n+1)-th optical fiber 10 and a position in an optical fiber ribbon longitudinal direction for the bonding part 20 that bonds an (n+2)-th optical fiber 10 and an (n+3)-th optical fiber 10, so that an interval between adjacent bonding parts 20 in a width direction of the optical fiber ribbon 100 may be made uniform, and accordingly, uniform width-direction flexibility may be secured at entire positions in a longitudinal direction of the optical fiber ribbon 100.

Further, positions in an optical fiber ribbon longitudinal direction for a plurality of bonding parts 20 periodically formed in a width direction of the optical fiber ribbon in the rollable optical fiber ribbon 100 according to the present invention may be configured to correspond to each other.

Specifically, positions in an optical fiber ribbon longitudinal direction for the bonding parts 20 that bond an n-th (n is a natural number of 1 or more) optical fiber 10 and an (n+1)-th optical fiber 10, and positions in an optical fiber ribbon longitudinal direction for the bonding parts 20 that bond an (n+3)-th optical fiber 10 and an (n+4)-th optical fiber 10 may be configured to correspond to each other.

For example, among twelve optical fibers 10 constituting the rollable optical fiber ribbon 100 of an embodiment illustrated in FIG. 2, positions in an optical fiber ribbon longitudinal direction for bonding parts 20 that bond a first (n, n=1) optical fiber 10(1) and a second optical fiber 10(2), bonding parts 20 that a fourth optical fiber 10(2) and a fifth optical fiber 10(3), bonding parts 20 that bond a seventh optical fiber 10(7) and an eighth optical fiber 10(8), and bonding parts 20 that bond a tenth optical fiber 10 and an eleventh optical fiber 10 may be configured to all correspond to each other, so as to be formed substantially in a straight line in an optical fiber width direction.

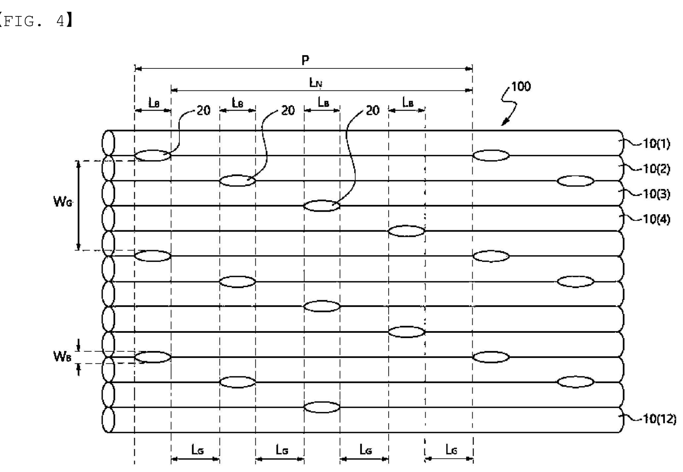

FIG. 4 illustrates a plan view of another embodiment of a rollable optical fiber ribbon according to the present invention.

Specifically, FIG. 4 illustrates an embodiment in a case where four optical fibers 10 are arranged between a pair of adjacent bonding parts 20 in a width direction of an optical fiber ribbon, among the rollable optical fiber ribbon 100 according to the present invention.

The rollable optical fiber ribbon 100 illustrated in FIG. 4 has four optical fibers 10 arranged between a pair of adjacent bonding parts 20 in a width direction of an optical fiber ribbon, and therefore a separation distance (W_{G}) between a pair of adjacent bonding parts 20 is formed larger than in a case of arranging three optical fibers 10 between a pair of adjacent bonding parts 20 as in FIG. 2, thereby effectively preventing a phenomenon in which bonding parts are mutually bonded and having an effect that flexibility is further improved in a width direction of an optical fiber ribbon.

When four optical fibers 10 are provided between a pair of adjacent bonding parts 20 in a width direction of an optical fiber ribbon, in the rollable optical fiber ribbon 100 according to the present invention, as illustrated in FIG. 4, the bonding parts 20 that bond an n-th (n is a natural number of 1 or more) optical fiber 10 and an (n+1)-th optical fiber 10, the bonding parts 20 that bond the (n+1)-th optical fiber 10 and the (n+2)-th optical fiber 10, the bonding parts 20 that bond the (n+2)-th optical fiber 10 and the (n+3)-th optical fiber 10, and the bonding parts 20 that bond the (n+3)-th optical fiber 10 and the (n+4)-th optical fiber 10 may be formed in a diagonal direction or a stepwise pattern.

In this case, as illustrated in FIG. 4, among a plurality of optical fibers 10, positions in an optical fiber ribbon longitudinal direction for the bonding parts 20 that bond an n-th (n is a natural number of 1 or more) optical fiber 10 and an (n+1)-th optical fiber 10, positions in an optical fiber ribbon longitudinal direction for the bonding parts 20 that bond the (n+1)-th optical fiber 10 and the (n+2)-th optical fiber 10, positions in an optical fiber ribbon longitudinal direction for the bonding parts 20 that bond the (n+2)-th optical fiber 10 and the (n+3)-th optical fiber 10, and positions in an optical fiber ribbon longitudinal direction for the bonding parts 20 that bond the (n+3)-th optical fiber 10 and the (n+4)-th optical fiber 10 may be configured to not all correspond to each other.

For example, the rollable optical fiber ribbon 100 of an embodiment illustrated in FIG. 4 is configured with twelve optical fibers 10, and positions in an optical fiber ribbon longitudinal direction for the bonding parts 20 that bond a first (n, n=1) optical fiber 10(1) and a second (n+1) optical fiber 10(2), the bonding parts 20 that bond the second (n+1) optical fiber 10(2) and a third (n+2) optical fiber 10(3), the bonding parts 20 that bond the third (n+2) optical fiber 10(3) and a fourth (n+3) optical fiber 10(4), and the bonding parts 20 that bond the fourth (n+3) optical fiber 10(4) and a fifth (n+4) optical fiber 10(5) may be configured to not all correspond to each other.

Further, among a plurality of optical fibers 10 constituting the optical fiber ribbon 100, positions in an optical fiber ribbon longitudinal direction for the bonding parts 20 that bond an n-th optical fiber 10 and an (n+1)-th optical fiber 10, positions in an optical fiber ribbon longitudinal direction for the bonding parts 20 that bond the (n+1)-th optical fiber 10 and the (n+2)-th optical fiber 10, positions in an optical fiber ribbon longitudinal direction for the bonding parts 20 that bond the (n+3)-th optical fiber 10 and the (n+4)-th optical fiber 10, and positions in an optical fiber ribbon longitudinal direction for the bonding parts 20 that bond the (n+4)-th optical fiber 10 and the (n+5)-th optical fiber 10 may be configured to be spaced from each other at the same interval respectively so that an interval between adjacent bonding parts 20 in a width direction of the optical fiber ribbon 100 may be made uniform, and accordingly, uniform width-direction flexibility may be secured at entire positions in an longitudinal direction of the optical fiber ribbon 100.

Similarly to an embodiment illustrated in FIG. 2, the rollable optical fiber ribbon 100 according to the present invention may be configured such that positions in an optical fiber ribbon longitudinal direction for four bonding parts 20 that are periodically formed in a width direction of an optical fiber ribbon correspond to each other.

Specifically, positions in an optical fiber ribbon longitudinal direction of the bonding part 20 that bonds an n-th (n is a natural number of 1 or more) optical fiber 10 and an (n+1)-th optical fiber 10, and positions in an optical fiber ribbon longitudinal direction of the bonding part 20 that bonds an (n+4)-th optical fiber 10 and an (n+5)-th optical fiber 10 may be configured to correspond to each other.

In an embodiment illustrated in FIG. 4, among twelve optical fibers 10 constituting the rollable optical fiber ribbon 100, positions in an optical fiber ribbon longitudinal direction for bonding parts 20 that bond a first (n, n=1) optical fiber 10(1) and a second optical fiber 10(2), bonding parts 20 that bond a fifth optical fiber 10(2) and a sixth optical fiber 10(3), and bonding parts 20 that bond a ninth optical fiber 10(7) and a tenth optical fiber 10(8) may be configured to all correspond to each other, so as to be formed substantially in a straight line in a width direction of an optical fiber.

In the rollable optical fiber ribbon 100 according to the present invention, pairs of adjacent optical fibers 10, among a plurality of optical fibers 10, are bonded through the plurality of bonding parts 20 that are arranged with a separation along a longitudinal direction of an optical fiber ribbon, and therefore in the rollable optical fiber ribbon 100, the plurality of optical fibers 10 are maintained in a mutual bonded state at the bonding part 20, and a non-bonding state is maintained in a remaining region except for the bonding part 20 so that rolling in a width direction is possible, and therefore the rollable optical fiber ribbon 100 may be efficiently accommodated in an internal space of an optical cable or a tube in a pipeline.

As such, the rollable optical fiber ribbon 100 according to the present invention may be configured such that the bonding parts 20 that bond a pair of adjacent optical fibers 10 are formed discontinuously without forming the bonding parts 20 over an entire boundary region between the pair of adjacent optical fibers 10 in order to secure flexibility that enables widthwise rolling.

That is, a plurality of bonding parts 20 are formed discontinuously along a longitudinal direction of an optical fiber ribbon, but by arranging the plurality of bonding parts 20 to be spaced from each other, a bonding strength of the bonding part 20 is reduced so that the optical fiber ribbon 100 may be configured to be capable of widthwise rolling.

Meanwhile, the shorter a length of the bonding part 20 is and the lower a frequency of the bonding part 20 along a longitudinal direction of an optical fiber ribbon, the easier it may be to roll the rollable optical fiber ribbon 100 in a width direction to minimize volume; however, because bonding strength is insufficient, in a rolling process a boundary region of a pair of adjacent optical fibers 10 may be separated or a separated optical fiber 10 may be damaged.

Conversely, in order to prevent a separation phenomenon of an optical fiber 10, when increasing a length of the bonding part 20 and increasing a frequency of the bonding part 20 along a longitudinal direction of an optical fiber ribbon, the rollable optical fiber ribbon 100 is not easily rolled or in a branching process of an optical fiber 10 an optical fiber 10 is damaged or a residue amount of resin on a branched optical fiber 10 is large so that the optical fiber 10 is not cleanly branched.

Therefore, in order to enable widthwise rolling and to prevent pair of adjacent optical fibers 10 from being separated from each other in a rolling process, and furthermore, to prevent optical fiber 10 damage and to enable easy branching even in a case of branching a specific optical fiber 10, a bonding part of a form as below is applied.

Specifically, in order to form a bonding part of the rollable optical fiber ribbon 100 according to the present invention, each bonding part 20 length (L_{B}) is configured to be 5 millimeters (mm) to 18 millimeters (mm), and among a plurality of optical fibers 10, a separation distance (or separation distance, gap distance) (L_{G}) in a longitudinal direction of an optical fiber ribbon between the bonding part 20 that bonds an n-th (n is a natural number of 1 or more) optical fiber 10 and an (n+1)-th optical fiber 10 and the bonding part 20 that bonds the (n+1)-th optical fiber 10 and the (n+2)-th optical fiber 10 is configured to be 3 millimeters (mm) to 15 millimeters (mm), and among the plurality of bonding parts 20 that bond a pair of adjacent optical fibers 10, a length of the non-bonding part (L_{N}) between a pair of adjacent bonding parts 20 is configured to be 30 millimeters (mm) to 70 millimeters (mm).

Here, a ratio (L_{G}/L_{B}) of separation distance (L_{G}) between the bonding part 20 in the longitudinal direction of the optical fiber ribbon to the bonding part length (L_{B}) may be 0.4 to 2. When the ratio (L_{G}/L_{B}) of separation distance (L_{G}) between the bonding part 20 in the longitudinal direction of the optical fiber ribbon to the bonding part length (L_{B}) is less than 0.4, flexibility of the optical fiber ribbon 100 is overall degraded so that widthwise rolling may not be easy, whereas when the ratio (L_{G}/L_{B}) of separation distance (L_{G}) between the bonding part 20 in the longitudinal direction of the optical fiber ribbon to the bonding part length (L_{B}) exceeds 2, widthwise rolling of the optical fiber ribbon 100 is possible but optical fibers 10 by the bonding part 20 are unintentionally widened between cores so that a problem that batch connection work is not easy was confirmed.

Additionally, the separation distance (L_{G}) between the bonding parts 20 in the longitudinal direction of the optical fiber ribbon may be less than or equal to the bonding part 20 length (L_{B}).

Further, a ratio (L_{N}/L_{B}) of the length of the non-bonding part (L_{N}) to the bonding part 20 length (L_{B}) may be 2 to 10. When the ratio (L_{N}/L_{B}) of the length of the non-bonding part (L_{N}) to the bonding part 20 length (L_{B}) is less than 2, flexibility of the optical fiber ribbon 100 is degraded so that an optical fiber 10 is damaged in a rolling process or branching of a specific optical fiber 10 may not be easy, whereas when the ratio (L_{N}/L_{B}) of the length of the non-bonding part (L_{N}) to the bonding part 20 length (L_{B}) exceeds 10, widthwise rolling of the optical fiber ribbon 100 is possible but bonding strength by the bonding part 20 is insufficient so that a problem that the optical fiber 10 is easily separated was confirmed.

Meanwhile, the bonding part 20 of the rollable optical fiber ribbon 100 is repeatedly arranged periodically in a longitudinal direction, and preferably may have a period (P) of 24 millimeters (mm) to 84 millimeters (mm) in consideration of the bonding part 20 length (L_{B}), the length of the non-bonding part (L_{N}), and the separation distance (L_{G}) between the bonding parts 20 in the longitudinal direction of the optical fiber ribbon.

The bonding part 20 of the rollable optical fiber ribbon 100 according to the present invention may be configured by UV-curing or laser sintering various resins or similar materials such as a UV-curable resin or a laser-sinterable powder, and an amount of resin or similar material constituting the bonding part 20 may be configured to be substantially identical.

The rollable optical fiber ribbon 100 according to the present invention, on the premise that a specific pattern of the above-described bonding part 20 is formed, may prevent resin of the bonding part 20 from spreading and maintain a shape of the bonding part 20 by adjusting physical properties of the bonding part 20 to a predetermined range, and may prevent separation and damage of an optical fiber 10 during widthwise rolling of the optical fiber ribbon 100 by imparting sufficient bonding strength with the bonding part 20.

Specifically, the bonding part 20, while securing flexibility for widthwise rolling of the optical fiber ribbon 100, may have an elongation of cured or sintered resin in a range of 80% to 220% so that the bonding part 20 is clear and cleanly separable upon separation of bonded optical fibers 10.

In addition, since the plurality of bonding parts 20 need to have a stress of sufficient magnitude so that bonding strength of the bonding part 20 is excellently maintained even after curing or sintering and cracking or fracture of the bonding part 20 by external shock is prevented, a tensile strength of the bonding part 20 may be 7 MPa to 21 MPa.

Further, in order to have widthwise rolling of the rollable optical fiber ribbon 100 or to maintain a rolling state, a secant modulus of elasticity of the bonding part 20 may be 30 MPa to 90 MPa at 2.5% strain.

Further, in order to form a plurality of bonding parts 20 that are arranged with a separation along a longitudinal direction of the optical fiber ribbon, since resin needs to have appropriate flowability so that resin is applied accurately and quickly and a property of dropping after curing or sintering is prevented, a viscosity of resin constituting the bonding part 20 is 150 mPa·s to 440 mPa·s at 30°C, and a density may be 0.52 g/cm³ to 1.73 g/cm³ at 23°C.

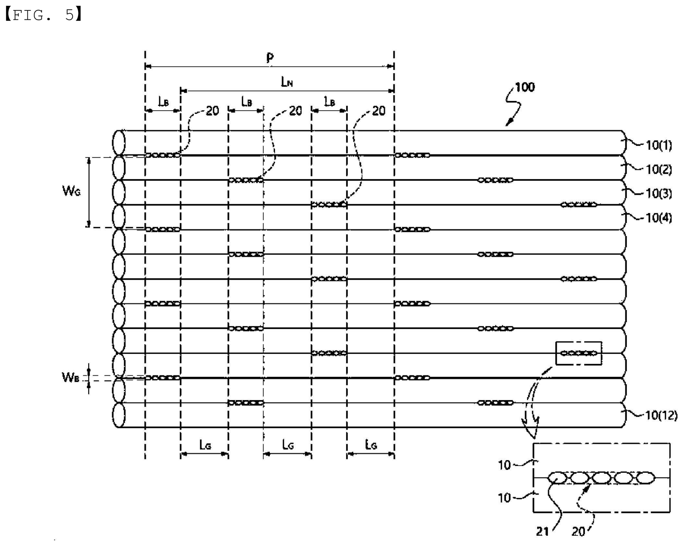

Hereinafter, with reference to FIGS. 5 to 7, various embodiments according to a bonding part shape of the rollable optical fiber ribbon 100 according to the present invention will be described. In various embodiments of the rollable optical fiber ribbon 100 according to the present invention illustrated in FIGS. 5 to 7, details that are redundant with an embodiment of the rollable optical fiber ribbon 100 illustrated in FIG. 2 are omitted.

As illustrated in FIGS. 5 to 7, in the rollable optical fiber ribbon 100 according to the present invention, each bonding part 20 for bonding a pair of adjacent optical fibers 10 may be configured with a plurality of bonding points 21 that are discontinuous or continuous in a longitudinal direction of an optical fiber ribbon.

As such, the rollable optical fiber ribbon 100 according to the present invention, instead of configuring the bonding part 20 by filling with resin without empty space, may be configured with a plurality of bonding points 21 or may change a form thereof while configuring a bonding part pattern as with reference to FIG. 2, whereby an amount of resin constituting one bonding part 20 is further reduced so that width-direction flexibility of the optical fiber ribbon 100 and separation characteristics of the optical fiber 10 may be improved.

The rollable optical fiber ribbon 100 illustrated in FIG. 5 is such that each bonding part 20 is formed of a plurality of bonding points 21, and the plurality of bonding points 21 may be arranged with a separation along a longitudinal direction of an optical fiber ribbon. In the embodiment illustrated in FIG. 5, the bonding part 20 is illustrated as being configured with five bonding points 21, but the number of the bonding points 21 may be increased or decreased.

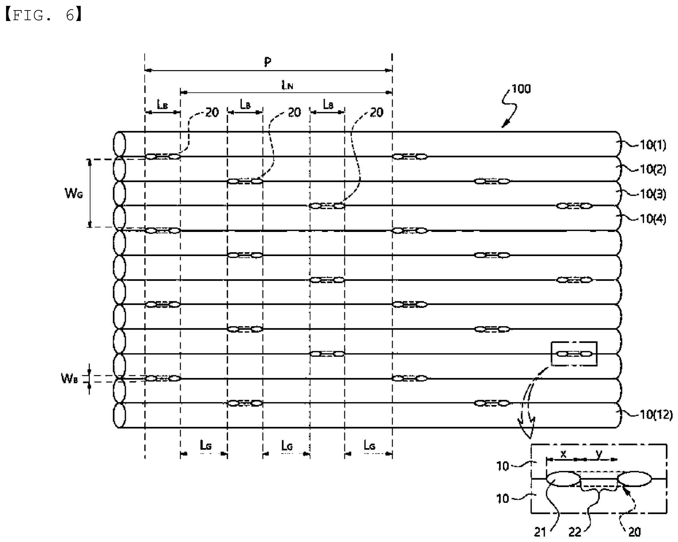

The rollable optical fiber ribbon 100 illustrated in FIG. 6 illustrates an embodiment of each bonding part 20 configured with two bonding points 21 that are spaced apart from each other along a longitudinal direction of an optical fiber ribbon, and one non-bonding region 22 between the two bonding points 21 that is not bonded by the bonding points 21.

As described above, on the premise that the length (L_{B}) of the bonding part 20 is in a range of 5 millimeters (mm) to 18 millimeters (mm), in a case where a ratio (x:y) of a length (x) of each bonding point 21 constituting the bonding part 20 to a length (y) of the non-bonding region 22 is configured to be in a range of 0.8 to 1.2, it was confirmed that, while stably maintaining bonding strength between a pair of adjacent optical fibers 10, a separation phenomenon between an optical fiber 10 and the bonding part 20 in a widthwise rolling process of the optical fiber ribbon 100 is prevented and stress applied to an optical fiber 10 bonded to each bonding part 20 may be minimized.

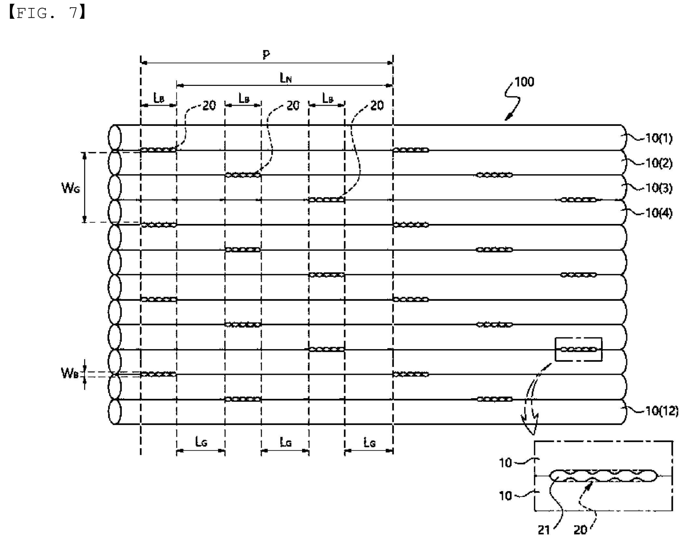

The rollable optical fiber ribbon 100 illustrated in FIG. 7 is such that each bonding part 20 is formed of a plurality of bonding points 21, and the plurality of bonding points 21 may be configured to be integrally connected without being separated or spaced. As illustrated in FIG. 7, in a case of configuring the plurality of bonding points 21 by using mutual connection, compared to a case of arranging the plurality of bonding points 21 to be spaced apart from each other, bonding strength between an optical fiber 10 and the bonding part 20 is further improved and a deviation of separation strength in one bonding part 20 may be minimized, and an amount of resin may be sufficiently reduced compared to the embodiment illustrated in FIG. 2.

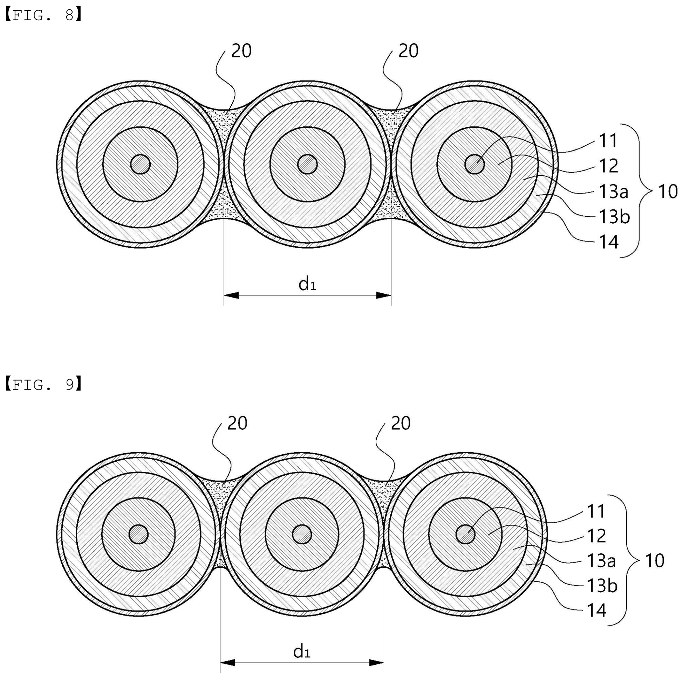

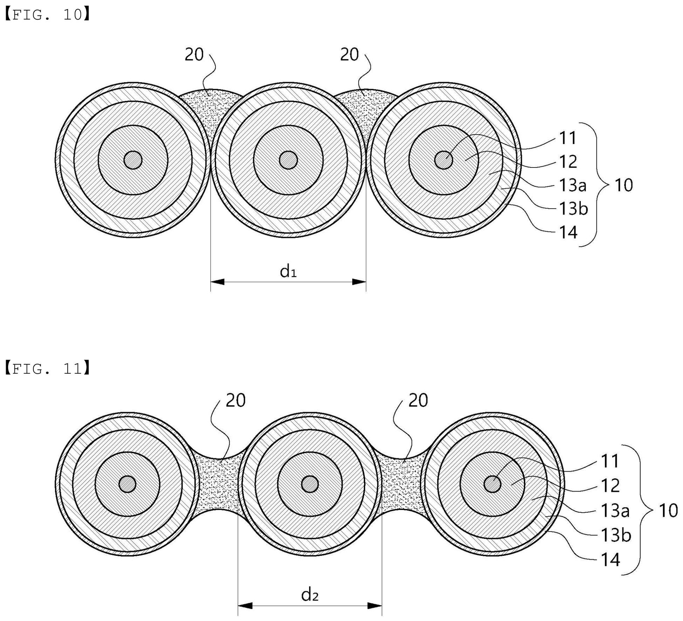

FIG. 8 illustrates an enlarged cross-sectional view of an embodiment of a rollable optical fiber ribbon according to the present invention, FIG. 9 illustrates an enlarged cross-sectional view of another embodiment of a rollable optical fiber ribbon according to the present invention, FIG. 10 illustrates another embodiment of an optical fiber ribbon according to the present invention, and FIG. 11 illustrates an enlarged cross-sectional view of another embodiment of a rollable optical fiber ribbon according to the present invention.

The optical fiber ribbon 100 illustrated in FIGS. 8 to 10, in which twelve general optical fibers 10 are bonded, while satisfying a maximum of 3.22 mm (3,220 µm) based on IEC standards or ANSI/ICEA standards, which govern optical fiber ribbons or optical cables, related to a width limitation of a 12-core optical fiber ribbon 100, may be bonded in a state in which most adjacent optical fibers 10 are in mutually external contact or spaced apart from each other.

The embodiment illustrated in FIG. 8 is a case where an amount of resin arranged on both sides of an optical fiber ribbon in the bonding part 20 of an optical fiber ribbon including optical fibers 10 that are in mutually external contact is substantially uniform.

The embodiment illustrated in FIG. 9 is a case where, in the bonding parts 20 of an optical fiber ribbon including optical fibers 10 that are in mutually external contact, an amount of resin arranged on one side of the optical fiber ribbon, for example, arranged on a lower portion of the optical fiber ribbon, is reduced compared to an amount of resin arranged on the other side of the optical fiber ribbon, for example, arranged on an upper portion of the optical fiber ribbon.

As illustrated in FIG. 9, instead of resin applied to the bonding parts 20 on both sides of the optical fiber ribbon 100 being applied in substantially the same amount to each other, even in a case where resin applied to the bonding part 20 on one side is configured to be about 50% or less than an amount of resin applied to the bonding region 20 on the other side, not only is a rolling characteristic in one direction excellent during rolling of the optical fiber ribbon 100 but also an amount of resin may be reduced overall.

The embodiment illustrated in FIG. 10 is an embodiment in a case where resin is applied only to an upper portion of an optical fiber ribbon including optical fibers 10 that are in mutually external contact.

As illustrated in FIG. 10, instead of forming the bonding part 20 by applying resin to both sides of the optical fiber ribbon 100, the bonding part 20 is formed by applying resin only to any one region of both sides of the optical fiber ribbon 100, for example, only to an upper portion among an upper portion and a lower portion of the optical fiber ribbon, so that a total amount of resin used may be effectively reduced.

In this case, despite forming the bonding part 20 only on one side of the optical fiber ribbon 100, in order to make bonding strength between optical fibers 10 by the bonding part 20 sufficient, an application amount per unit area of resin constituting the bonding part 20 may be further increased, and accordingly, as illustrated in FIG. 10, the bonding part 20 may have an overall convex shape after resin curing.

The optical fiber ribbon 100 illustrated in FIG. 11 is configured by optical fibers 10 that are mutually spaced being bonded, and in a case where a fine optical fiber is applied, bonding parts 20 may be configured by bonding, with resin, between optical fibers 10 in a state in which the optical fibers 10 are spaced apart from each other, so that bonding performance may be improved to make batch connection work easy.

Further, the present invention may provide a manufacturing method of the rollable optical fiber ribbon 100 described with reference to FIGS. 2 to 11. A manufacturing method of the above-described rollable optical fiber ribbon 100 according to the present invention may be configured to include steps of: arranging a plurality of optical fibers 10 in parallel; conveying the plurality of optical fibers 10 arranged in parallel at a predetermined line speed; dispensing resin, from a plurality of dispenser nozzles arranged with a separation in a width direction of an optical fiber ribbon, between the conveyed plurality of optical fibers 10; and forming a plurality of bonding parts 20 by UV curing of the dispensed resin.

The plurality of dispenser nozzles may be arranged to be spaced (or with a separation) between optical fibers to be bonded in parallel at a predetermined interval in the width direction of the optical fiber ribbon 100, and for the plurality of dispenser nozzles, timing at which resin is dispensed, time during which resin is dispensed, an amount of resin dispensed, or the like may be adjusted respectively.

Here, the plurality of dispenser nozzles provided in the width direction of the optical fiber ribbon 100 may be controlled to dispense resin simultaneously at predetermined time intervals while the plurality of optical fibers 10 arranged in parallel are continuously conveyed. Here, in the step of conveying the optical fibers 10, a conveying line speed of the optical fibers 10 may preferably be in a range of 50 m/min to 1000 m/min.

In addition, in order to form a specific bonding part pattern on the optical fiber ribbon 100, it may be configured with a plurality of dispenser sets including one or more of the dispensers arranged with a separation in the width direction of the optical fiber ribbon 100, and preferably the number of the dispenser sets may be three or more.

Here, the plurality of dispenser sets in a longitudinal direction of the optical fiber ribbon 100 may be configured to be arranged in multiple stages, and dispenser nozzles of the dispensers included in each dispenser set may be configured in a synchronous manner to dispense resin simultaneously, so that a precise bonding part structure with minimized tolerance may be implemented by reducing nozzle control errors of each dispenser.

Therefore, while the plurality of optical fibers 10 arranged in parallel are conveyed at high speed, by alternately dispensing resin at regular intervals by at least one dispenser nozzle arranged with a separation in a width direction of an optical fiber ribbon, a plurality of bonding parts 20 whose all width-direction positions on the optical fiber ribbon 100 are different may be efficiently formed on the optical fiber ribbon 100 without variation of a position of the dispenser nozzle.

Further, an amount of resin constituting each bonding part and a size of the bonding part according thereto may be controlled by adjusting an hourly dispense amount of the dispenser and a conveying speed of the optical fibers.

While the present specification has been described above with reference to the exemplary embodiments of the present invention, it may be understood by those skilled in the art that the present invention may be variously modified and changed without departing from the technical teachings and scope of the present invention disclosed in the claims. Therefore, it should be understood that any modified embodiment that essentially includes the constituent elements of the claims of the present invention is included in the technical scope of the present invention.

## Claims

1. A rollable optical fiber ribbon that is rollable in a width direction of the ribbon, comprising:
a plurality of optical fibers arranged in parallel; and
a plurality of bonding parts arranged with a separation in a longitudinal direction of the ribbon and configured to bond a pair of adjacent optical fibers among the plurality of optical fibers,
wherein the plurality of bonding parts is arranged at positions corresponding to each other in the width direction of the optical fiber ribbon, three or more of the optical fibers are arranged between a pair of adjacent bonding parts in the width direction of the optical fiber ribbon,
wherein a separation distance (W_{G}) between the pair of adjacent bonding parts in the width direction of the optical fiber ribbon is 360 micrometers (µm) to 1120 micrometers (µm), and
wherein a width (W_{B}) of the bonding part is smaller than two times an outer diameter (D_{F}) of the optical fiber.

2. The rollable optical fiber ribbon of claim 1, wherein a length (L_{B}) of the bonding part is 5 millimeters (mm) to 18 millimeters (mm).

3. The rollable optical fiber ribbon of claim 2, wherein a separation distance (L_{G}) in the longitudinal direction of the optical fiber ribbon between a bonding part that bonds an n-th (n is a natural number of 1 or more) optical fiber and an (n+1)-th optical fiber and a bonding part that bonds the (n+1)-th optical fiber and a (n+2)-th optical fiber is 3 millimeters (mm) to 15 millimeters (mm), among the plurality of optical fibers.

4. The rollable optical fiber ribbon of claim 2, wherein a ratio (L_{G}/L_{B}) of the separation distance (L_{G}) in the longitudinal direction of the optical fiber ribbon between the bonding parts to the length (L_{B}) of the bonding part is 0.4 to 2.

5. The rollable optical fiber ribbon of claim 2, wherein the separation distance (L_{G}) in the longitudinal direction of the optical fiber ribbon between the bonding parts is less than or equal to the length (L_{B}) of the bonding part.

6. The rollable optical fiber ribbon of claim 2, wherein a length of the non-bonding part (L_{N}), which is the shortest distance between a pair of adjacent bonding parts among the plurality of bonding parts that bond a pair of adjacent optical fibers, is 30 millimeters (mm) to 70 millimeters (mm).

7. The rollable optical fiber ribbon of claim 2, wherein a ratio (L_{N}/L_{B}) of the length of the non-bonding part (L_{N}) to the length (L_{B}) of the bonding part is 2 to 10.

8. The rollable optical fiber ribbon of claim 2, wherein a lengthwise period (P) of the bonding part is 24 millimeters (mm) to 84 millimeters (mm).

9. The rollable optical fiber ribbon of claim 1, wherein the separation distance (W_{G}) between the pair of adjacent bonding parts in the width direction of the optical fiber ribbon is 360 micrometers (µm) to 835 micrometers (µm).

10. The rollable optical fiber ribbon of claim 1, wherein the bonding part is formed by applying a UV-curable resin between a pair of adjacent optical fibers and then curing the applied resin.

11. The rollable optical fiber ribbon of claim 10, wherein the bonding part has an elongation of 80% to 220%, a tensile strength of 7 MPa to 21 MPa, and a secant modulus of elasticity of 30 MPa to 90 MPa at 2.5% strain.

12. The rollable optical fiber ribbon of claim 10, wherein a resin constituting the bonding part has a viscosity of 150 mPa·s to 440 mPa·s at 30°C, and a density of 0.52 g/cm³ to 1.73 g/cm³ at 23°C.

13. The rollable optical fiber ribbon of claim 1, wherein, among the plurality of optical fibers, positions in the width direction of the optical fiber ribbon for bonding parts that bond an n-th (n is a natural number of 1 or more) optical fiber and an (n+1)-th optical fiber, bonding parts that bond the (n+1)-th optical fiber and a (n+2)-th optical fiber, and a bonding part that bonds the (n+2)-th optical fiber and a (n+3)-th optical fiber do not all correspond to each other.

14. The rollable optical fiber ribbon of claim 13, wherein, among the plurality of optical fibers, positions in the longitudinal direction of the optical fiber ribbon for bonding parts that bond the n-th (n is a natural number of 1 or more) optical fiber and the (n+1)-th optical fiber, and bonding parts that bond the (n+3)-th optical fiber and a (n+4)-th optical fiber correspond to each other.

15. The rollable optical fiber ribbon of claim 13, wherein, among the plurality of optical fibers, positions in the width direction of the optical fiber ribbon for bonding parts that bond an (n+3)-th optical fiber and an (n+4)-th optical fiber do not correspond to bonding parts that bond an n-th optical fiber and an (n+1)-th optical fiber, bonding parts that bond the (n+1)-th optical fiber and an (n+2)-th optical fiber, and bonding parts that bond the (n+2)-th optical fiber and the (n+3)-th optical fiber, and
wherein positions in the longitudinal direction of the optical fiber ribbon for bonding parts that bond the n-th optical fiber and the (n+1)-th optical fiber correspond to positions for bonding parts that bond the (n+4)-th optical fiber and the (n+5)-th optical fiber.

16. The rollable optical fiber ribbon of claim 1, wherein the width (W_{B}) of the bonding part is smaller than 1.6 times the outer diameter (D_{F}) of the optical fiber.

17. A manufacturing method of the rollable optical fiber ribbon according to any one of claims 1 to 16, the manufacturing method comprising:
arranging a plurality of optical fibers in parallel;
conveying the plurality of optical fibers arranged in parallel at a line speed of 50 m/min to 1000 m/min;
dispensing resin between the plurality of conveyed optical fibers from a plurality of dispenser nozzles arranged with a separation in the width direction of the optical fiber ribbon; and
forming a plurality of bonding parts by UV curing of the dispensed resin.

18. The manufacturing method of the rollable optical fiber ribbon of claim 17, wherein a plurality of dispensers is configured with a plurality of dispenser sets including one or more dispensers, each dispenser set is arranged with a separation at different positions in the longitudinal direction of the optical fiber ribbon, and each dispenser included in one dispenser set is arranged with a separation in the width direction at corresponding positions in the longitudinal direction of the optical fiber ribbon.

19. The manufacturing method of the rollable optical fiber ribbon of claim 18, wherein resin is dispensed simultaneously from dispenser nozzles of all dispensers.

20. The manufacturing method of the rollable optical fiber ribbon of claim 18, wherein the number of the dispenser sets is three or more.
